# EUROPÄISCHE PATENTSCHRIFT

(11) **EP 2 433 184 B1**
(45) Veröffentlichungstag und Bekanntmachung des Hinweises auf die Patenterteilung: **28.12.2016**
(21) Anmeldenummer: 10720607.0
(22) Anmeldetag: 19.05.2010
(51) Int. Cl.: G05B 9/02, G05B 19/05

(54) **STEUERUNGSSYSTEM ZUM STEUERN EINES PROZESSES**
CONTROL SYSTEM FOR CONTROLLING A PROCESS
SYSTÈME DE COMMANDE PERMETTANT DE COMMANDER UN PROCESSUS

(30) Priorität: 22.05.2009 DE 102009022389
(43) Veröffentlichungstag der Anmeldung: 28.03.2012
(73) Patentinhaber: Phoenix Contact GmbH & Co. KG, 32825 Blomberg (DE)
(72) Erfinder: OSTER, Viktor, 32825 Blomberg (DE)
(74) Vertreter: Michalski Hüttermann & Partner Patentanwälte mbB
(86) Internationale Anmeldenummer: PCT/EP2010/056884
(87) Internationale Veröffentlichungsnummer: WO 2010/133632

(56) Entgegenhaltungen:
- EP-A1- 2 048 555
- EP-A2- 1 857 900
- WO-A1-01/27956
- DE-A1- 10 357 797
- DE-A1- 19 928 984
- GEORG BECKER ET AL: "Systemhandbuch. Das SicherheitsProgramm fuer die Industrien der Welt passage", 1 January 2005 (2005-01-01), SYSTEMHANDBUCH. DAS SICHERHEITSPROGRAMM FUER DIE INDUSTRIEN DER WELT, SIEMENS AG, DE, PAGE(S) 1 - 346, XP002564889,

## Beschreibung

Die Erfindung betrifft ein Steuerungssystem sowie eine Steuerungsvorrichtung zum Steuern eines Prozesses mit einem Sicherheitsmodul und einem Ausgabemodul. Ferner betrifft die Erfindung ein Verfahren zum Steuern eines Prozesses mit einem Sicherheitsmodul und einem Ausgabemodul.

Steuerungssysteme zum Steuern eines Prozesses, insbesondere eines sicherheitsrelevanten Prozesses, spielen in vielen Anwendungsgebieten eine überragende Rolle, wie beispielsweise in der Automatisierungstechnik. Derartige Steuerungssysteme, welche auch als Feldbussysteme ausführbar sind, umfassen typischerweise eine Mehrzahl von Signaleinheiten oder Busteilnehmern, welche mit den zu steuernden Prozessen verbunden sind, und weisen in der Regel einen Busmaster auf, welcher eine rahmenbasierte Kommunikation mittels sogenannter Feldbustelegramme über den Feldbus steuert. Solche aus dem Stand der Technik bekannten Feldbussysteme bieten eine Vielzahl von Möglichkeiten zur Steuerung des Prozesses, jedoch ist es oftmals problematisch, derartige Feldbussysteme so auszulegen, dass sie sicherheitsrelevanten Anforderungen gerecht werden.

Unter einem sicherheitsrelevanten Prozess wird in diesem Zusammenhang insbesondere ein derartiger Prozess verstanden, von dem bei Auftreten eines Fehlers eine nicht zu vernachlässigende Gefahr für Menschen und/oder materielle Güter ausgeht. Insofern wird an ein den sicherheitsrelevanten Prozess steuerndes Steuerungssystem die Anforderung gestellt, bei Vorliegen eines Fehlers den Prozess und/oder ein den Prozess umfassendes Gesamtsystem in einen sicheren Zustand zu überführen. Beispiele für sicherheitsrelevante Prozesse sind chemische Verfahren, bei denen kritische Parameter unbedingt in einem vorgegebenen Bereich gehalten werden müssen, komplexe Maschinensteuerungen, wie etwa bei einer hydraulischen Presse oder einer Fertigungsstraße, bei welchem beispielsweise das Inbetriebnehmen eines Press-/Schneidwerkzeugs einen sicherheitsrelevanten Prozess darstellen kann. Weitere Beispiele für sicherheitsrelevante Prozesse sind die Überwachung von Schutzgittern, Schutztüren oder Lichtschranken, die Steuerung von Fangschaltern oder auch die Reaktion auf Notausschalter.

Für sicherheitsrelevante Prozesse ist es somit unbedingt erforderlich, dass die für das Steuerungssystem verwendete Hardware und Software der Geräte unterschiedliche Maßnahmen, wie beispielsweise mehrere Abschaltwege für sicherheitsrelevante Ausgänge, Redundanzen der Schaltkreise, Diagnoseschaltungen, fehlererkennende Maßnahmen der Software oder Über- und Unterspannungsschutz, aufweisen, um vorgenannte Anforderungen zu erfüllen. Einschlägige Standards, um den sicherheitsrelevanten Anforderungen gerecht zu werden, finden sich insbesondere in den Sicherheitsnormen DIN EN 61508, DIN EN 62061 oder DIN EN ISO 13849.

Aus dem Stand der Technik sind Steuerungssysteme mit sicherheitsrelevanten Ausgängen bekannt, wobei die Ausgänge zwar im Abschaltweg liegen, jedoch selbst keine Sicherheitsfunktion gemäß vorgenannten Sicherheitsnormen ausführen. Derartige sicherheitsrelevante Ausgänge werden, beispielsweise im Fehlerfall oder bei einer Sicherheitsanforderung, von sicheren Ausgabemodulen angesteuert, also Ausgabemodulen gemäß vorab genannter Sicherheitsnormen, die lokal agieren oder von einer sicheren Steuerung angesteuert werden. Jedoch sind die Kosten für die Hardware sowie den Engineering-Aufwand derartiger aus dem Stand der Technik bekannter Steuerungssysteme sehr hoch. Ferner sind derartige Steuerungssystem aufgrund mangelhafter Diagnosemöglichkeiten nur sehr beschränkt einsetzbar. Weiterhin ist bei derartigen Steuerungssystemen nachteilig, dass ein Querschluss an einem sicherheitsrelevanten Ausgang und/oder ein Querschluss zwischen Ausgängen, die von demselben sicheren Ausgangsmodul versorgt werden, nicht erkannt wird, und in einem derartigen Fall eine durch das Steuerungssystem gesteuerte Anlage sowie das Bedienungspersonal gefährdet sein können.

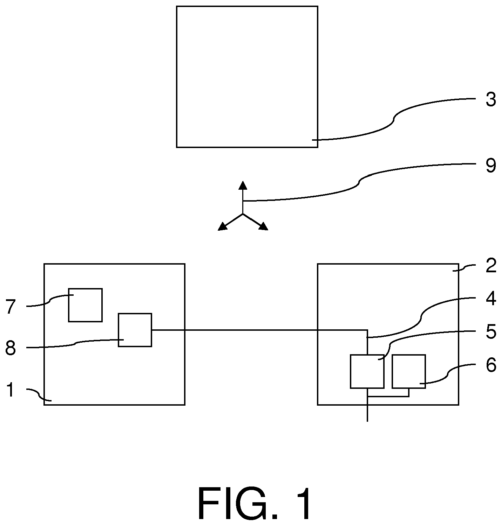

Das Dokument DE 199 28 984 A1 (Spalte 1 und Fig. 1) sowie das Dokument WO 01/27956 A1 offenbaren Steuerungssysteme zum Steuern eines Prozesses, mit einem Sicherheitsmodul und einem Ausgabemodul, wobei das Sicherheitsmodul ein sicheres Signal bereitstellt, und das Ausgabemodul einen Ausgang zum Ausgeben des sicheren Signals zur Steuerung des Prozesses sowie ein Mittel zur Rücklesung eines Ist-Zustands des Ausgangs aufweist, wobei das Ausgabemodul ausgeführt ist, den zurückgelesenen Ist-Zustand mit einem Soll-Zustand zu vergleichen und bei einer Differenz zwischen dem Ist-Zustand und dem Soll-Zustand den Prozess in einen sicheren Zustand zu überführen.

Der Erfindung liegt die Aufgabe zugrunde, ein Steuerungssystem, eine Steuerungsvorrichtung sowie ein Verfahren zum Steuern eines Prozesses anzugeben, das in besonders einfacher und günstiger Weise eine insbesondere sichere Steuerung des Prozesses ermöglicht.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Demnach erfolgt die Lösung der Aufgabe durch ein Steuerungssystem zum Steuern eines Prozesses, mit einem Sicherheitsmodul und einem Ausgabemodul, wobei das Sicherheitsmodul ein sicheres Signal bereitstellt, das Ausgabemodul einen Ausgang zum Ausgeben des sicheren Signals zur Steuerung des Prozesses aufweist, das Ausgabemodul ein Mittel zur Rücklesung eines Ist-Zustands des Ausgangs aufweist. Mittels des Sicherheitsmoduls ist der zurückgelesene Ist-Zustand mit einem Soll-Zustand vergleichbar und bei einer Differenz zwischen dem Ist-Zustand und dem Soll-Zustand ist der Prozess durch Abschalten des sicheren Signals in einen sicheren Zustand überführbar.

Erfindungsgemäß wird damit ein Steuerungssystem zum Steuern eines Prozesses, insbesondere zum Steuern eines sicherheitsrelevanten Prozesses, angegeben, das in sehr kostengünstiger Weise insbesondere für sicherheitsrelevante Anwendungen verwendbar ist, da das Ausgabemodul durch Rücklesung des Ist-Zustands eine Diagnoseinformation bzw. Zustandsinformation des Ausgangs dem Sicherheitsmodul zur Verfügung stellt.

Das erfindungsgemäße Steuerungssystem erlaubt somit eine einfache und saubere Trennung zwischen Standardtechnik, wie dem Ausgabemodul, also den Komponenten eines Steuerungssystems, die nicht den vorgenannten Sicherheitsnormen für sicherheitsrelevante Prozesse unterliegen, und der Sicherheitstechnik, wie dem Sicherheitsmodul, also den Komponenten des Steuerungssystems die den vorgenannten Sicherheitsnormen für sicherheitsrelevante Prozesse unterliegen, so dass die Baugröße der bei dem erfindungsgemäßen Steuerungssystem verwendeten Komponenten im Vergleich zu den aus dem Stand der Technik bekannten Komponenten reduziert werden kann. Da das Sicherheitsmodul, welches vorzugsweise nach den vorgenannten Sicherheitsnormen ausgeführt ist, die Anforderungen zur Steuerung eines sicherheitsrelevanten Prozesses gemäß den vorgenannten Sicherheitsnormen erfüllt, erfüllt das erfindungsgemäße Steuerungssystem ebenfalls die Anforderungen der vorgenannten Sicherheitsnormen.

Das Ausgabemodul kann als ein aus dem Stand der Technik bekanntes Ausgabemodul, wie beispielsweise ein Ausgabegerät mit Ausgängen zum Anschließen von Aktoren wie Motoren oder Stellgliedern, ausgeführt sein, wobei das Ausgabemodul gemäß der Erfindung ein Mittel zur Rücklesung des Ist-Zustands des Ausgangs aufweist. Weiterhin ist bevorzugt, dass das sichere Signal als eine sichere Spannung ausgeführt ist. Dabei ist das Adjektiv "sicher" des sicheren Signals derart auszulegen, dass dadurch die Erfüllung der Anforderungen der vorgenannten Sicherheitsnormen gemeint ist. Mit anderen Worten stellt also ein sicheres Signal, wie beispielsweise eine sichere Spannung, ein Signal dar, welches den Anforderungen der unterschiedlichen Sicherheitsnormen, wie beispielsweise DIN EN 61508, DIN EN 62061 oder DIN EN ISO 13849, genügt.

Unter einem sicheren Zustand wird derjenige Zustand verstanden, der eine potentielle Gefährdung der Anlage und/oder des Bedienpersonals verhindert und der im Fehlerfalle einzunehmen ist. Für den Bereich der Automatisierungstechnik ist in der Regel der energiefreie Zustand der sichere Zustand.

Gemäß der Erfindung ist es somit vorgesehen, dass das Sicherheitsmodul das sichere Signal bereitstellt, mit welchem das Ausgabemodul den Prozess steuert. Weiter ist bevorzugt, dass das Ausgabemodul aus dem Stand der Technik bekannte Einrichtungen zur Potentialtrennung, wie beispielsweise einen Optokoppler, und/oder Einrichtungen zur Ansteuerung des Ausgangs, wie beispielsweise einen Halbleiterschalter, aufweist. Weiterhin ist bevorzugt, dass bei einer das sichere Signal darstellenden Spannung das Mittel zur Rücklesung des Ist-Zustands des Ausgangs als Mittel zur Rücklesung einer Spannung ausgeführt ist, also beispielsweise als ein Mittel zur Erfassung der Spannung ausgeführt ist.

Das erfindungsgemäße Steuerungssystem erlaubt demnach eine Überwachung eines Signals zur Steuerung eines Prozesses derart, dass Fehler beim Ausgeben des Signals, wie beispielsweise ein Kurzschluss im Optokoppler des Ausgangmoduls, ein Durchlegieren elektronischer Bauteile im Ausgabemodul oder ein Querschluss eines Ausgang und/oder eines an den Ausgang angeschlossenen Aktors, in einfacher und sicherer Weise erfasst werden können, und bei Differenz zwischen dem derart zurückgelesenen Ist-Zustand mit einem Soll-Zustand der Prozess in einen sicheren Zustand überführbar ist.

Grundsätzlich kann das Überführen des Prozesses in den sicheren Zustand bei einer Differenz zwischen dem Ist-Zustand und dem Soll-Zustand in beliebiger Weise erfolgen. Dabei ist es gemäß einer weiteren bevorzugten Ausführungsform der Erfindung vorgesehen, dass der Prozess durch Abschalten des sicheren Signals in den sicheren Zustand überführbar ist. Im Falle einer sicheren Spannung als sicheres Signal kann dies also durch Abschalten der sicheren Spannung, vorzugsweise durch das Sicherheitsmodul, erfolgen. Weiterhin ist bevorzugt, dass das Abschalten des sicheren Signals durch einen Notausschalter erfolgen kann. Durch ein Abschalten des sicheren Signals wird also erreicht, dass das sichere Signal zur Steuerung des Prozesses nicht mehr an dem Ausgang des Ausgabemoduls anliegt.

Gemäß einer weiteren bevorzugten Ausführungsform der Erfindung ist vorgesehen, dass eine Steuerung und/oder eine sichere Steuerung zum Ansteuern des Sicherheitsmodul und/oder des Ausgabemoduls vorgesehen sind, wobei der Soll-Zustand durch die Steuerung und/oder durch die sichere Steuerung vorgebbar ist. Weiterhin ist bevorzugt, dass das Sicherheitsmodul als eine sichere Steuerung gemäß den vorgenannten Sicherheitsnormen ausgeführt ist. Weiterhin ist bevorzugt, dass der zurückgelesene Ist-Zustand von dem Ausgabemodul an die Steuerung und/oder an die sichere Steuerung übermittelbar ist und der empfangene Ist-Zustand von der Steuerung und/oder von der sicheren Steuerung an das Sicherheitsmodul übermittelbar ist.

Die Steuerung, welche vorzugsweise als eine aus dem Stand der Technik bekannte Steuerung zur Prozessautomatisierung ausgeführt ist, übernimmt also gemäß der vorliegenden bevorzugten Ausführungsform der Erfindung die Kommunikation zwischen dem Sicherheitsmodul und dem Ausgabemodul derart, dass der von dem Ausgabemodul zurückgelesene Ist-Zustand über die Steuerung an das Sicherheitsmodul zum Vergleich mit dem Soll-Zustand übermittelt wird. Das Sicherheitsmodul überprüft dann, ob eine Differenz zwischen dem Ist-Zustand und dem Soll-Zustand vorliegt, beispielsweise aus einem Querschluss, und überführt bei Vorliegen einer Differenz den Prozess in den sicheren Zustand. Da das Sicherheitsmodul gemäß den Anforderungen der vorgenannten Sicherheitsnormen ausgeführt ist, können andere in den vorgenannten Sicherheitsnormen aufgeführten Fehlerfälle ebenfalls von dem Sicherheitsmodul erkannt werden, welche dann auch zu einer Überführung des Prozesses in den sicheren Zustand führen können. Mit anderen Worten ist also bevorzugt, dass die Steuerung den Prozess steuert, während das sichere Ausgangsmodul nur im Fehlerfall oder bei einer Sicherheitsanforderung eingreift.

Grundsätzlich kann die Kommunikation zwischen dem Sicherheitsmodul, dem Ausgabemodul und der Steuerung und/oder der sicheren Steuerung beliebig erfolgen. Gemäß einer weiteren bevorzugten Ausführungsform der Erfindung ist jedoch vorgesehen, dass ein Feldbus zur Kommunikation zwischen dem Sicherheitsmodul, dem Ausgabemodul und der Steuerung und/oder der sicheren Steuerung vorgesehen ist. Der Feldbus ist vorzugsweise als ein aus dem Stand der Technik bekannter Feldbus, wie beispielsweise Interbus, Profibus oder Profinet, ausgeführt. Dadurch, dass der zurückgelesene Ist-Zustand zwischen dem Sicherheitsmodul und dem Ausgabemodul übertragen wird, also keine sicheren Daten gemäß den vorgenannten Sicherheitsnormen zwischen dem Sicherheitsmodul und dem Ausgabemodul übertragen werden, kann eine kostengünstige und einfache Implementierung des Steuerungssystems beispielsweise mit einem aus dem Stand der Technik bekannten Feldbus erfolgen.

Gemäß einer weiteren vorteilhaften Ausführungsform der Erfindung ist das Steuerungssystem als Feldbusanordnung ausgeführt. Ganz besonders ist bevorzugt, das Steuerungssystem für die Automatisierung einer Anlage zu verwenden.

Die Lösung der Aufgabe erfolgt weiterhin durch eine Steuerungsvorrichtung zum Steuern eines Prozesses, mit einem Sicherheitsmodul und einem Ausgabemodul, wobei das Sicherheitsmodul eine Energiequelle zum Bereitstellen eines sicheren Signals aufweist, das Sicherheitsmodul ein Vergleichsmittel zum Vergleichen eines Ist-Zustands mit einem Soll-Zustand und ein Abschaltmittel zum Überführen des Prozesses in einen sicheren Zustand aufweist, das Ausgabemittel einen Ausgang zum Ausgeben des sicheren Signals zur Steuerung des Prozesses aufweist und das Ausgabemodul ein Mittel zur Rücklesung des Ist-Zustands des Ausgangs aufweist.

Erfindungsgemäß wird damit eine Steuerungsvorrichtung zum Steuern eines Prozesses, insbesondere eines sicherheitsrelevanten Prozesses, bereitgestellt, die in besonders einfacher und kostengünstiger Weise durch Trennung der nach vorgenannten Sicherheitsnormen aufgebauten Komponenten, wie dem Sicherheitsmodul, und von Standardkomponenten, wie dem Ausgabemodul, eine verlässliche Erkennung von Fehlfunktionen oder Fehlzuständen beim Ausgeben des sicheren Signals aufweist, und im Falle einer Fehlfunktion oder eines Fehlzustandes den Prozess in einen sicheren Zustand überführt.

In bevorzugter Weise ist das sichere Signal als sichere Spannung gemäß den vorgenannten Sicherheitsnormen ausgeführt. Weiterhin ist bevorzugt, dass das Vergleichsmittel als ein aus dem Stand der Technik bekanntes Vergleichsmittel zum Vergleichen zweier Zustände ausgeführt ist, wie beispielsweise zum Vergleichen von zwei Spannungen miteinander, und das Abschaltmittel als ein aus dem Stand der Technik bekanntes Abschaltmittel, wie beispielsweise ein elektronischer Schalter oder Halbleiterschalter, ausgeführt ist. Ebenfalls ist bevorzugt, dass der Ausgang als ein aus dem Stand der Technik bekannter Ausgang zum Ausgeben eines Signals, wie beispielsweise einer Spannung, ausgeführt ist und das Mittel zur Rücklesung des Ist-Zustands als ein aus dem Stand der Technik bekanntes Mittel zur Rücklesung eines Zustands, wie beispielsweise ein integrierter Spannungsmesser zum Erfassen der Spannung, ausgeführt ist.

Gemäß einer weiteren bevorzugten Ausführungsform der Erfindung ist vorgesehen, dass mittels des Abschaltmittels der Prozess durch Abschalten des sicheren Signals in den sicheren Zustand überführbar ist. Weiterhin ist bevorzugt, dass eine Steuerung und/oder eine sichere Steuerung zum Ansteuern des Sicherheitsmoduls und/oder des Ausgabemoduls vorgesehen sind und der Soll-Zustand durch die Steuerung und/oder die sichere Steuerung vorgebbar ist. Weiterhin ist bevorzugt, dass der zurückgelesene Ist-Zustand von dem Ausgabemodul an die Steuerung und/oder an die sichere Steuerung übermittelbar ist und der empfangene Ist-Zustand von der Steuerung und/oder von der sicheren Steuerung an das Sicherheitsmodul übermittelbar ist. Weiterhin ist bevorzugt, dass ein Feldbus zur Kommunikation zwischen dem Sicherheitsmodul, dem Ausgabemodul und der Steuerung und/oder der sicheren Steuerung vorgesehen ist.

Bevorzugte Weiterbildungen der erfindungsgemäßen Steuerungsvorrichtung ergeben sich in Analogie zu dem oben beschriebenen Steuerungssystem.

Die Lösung der Aufgabe erfolgt erfindungsgemäß weiterhin durch ein Verfahren zum Steuern eines Prozesses mit einem Sicherheitsmodul und einem Ausgabemodul, aufweisend die Schritte Bereitstellen eines sicheren Signals durch das Sicherheitsmodul, Ausgeben des sicheren Signals zum Steuern des Prozesses durch das Ausgabemodul, Rücklesen eines Ist-Zustands des ausgegebenen sicheren Signals durch das Ausgabemodul, Feststellen einer Differenz zwischen dem Ist-Zustand und einem Soll-Zustand für den Prozess durch das Sicherheitsmodul und Überführen des Prozesses beim Vorliegen einer Differenz in einen sicheren Zustand.

Erfindungsgemäß wird damit ein Verfahren zum Steuern eines Prozesses, insbesondere eines sicherheitsrelevanten Prozesses, angegeben, das in kostengünstiger und einfacher Weise ein Überführen des Prozesses in einen sicheren Zustand erlaubt, insbesondere bei Vorliegen einer Differenz zwischen dem Ist-Zustand des ausgegebenen sicheren Signals und dem Soll-Zustand. Das erfindungsgemäße Verfahren erlaubt eine verbesserte Diagnose einer Fehlfunktion bei gleichzeitiger Kostenersparnis bei der Steuerung eines Prozesses, wobei ein nach den vorgenannten Sicherheitsnormen aufgebautes Sicherheitsmodul ein aus dem Stand der Technik bekanntes "Standard"-Ausgabemodul zur Steuerung eines Prozesses derart mit dem sicheren Signal versorgt, dass im Falle eines Fehlers, also bei Feststellen einer Differenz zwischen dem durch das Ausgabemodul ausgegebenen und wieder zurückgelesenen sicheren Signals und dem Soll-Zustand, den Prozess in den sicheren Zustand überführt.

Gemäß einer bevorzugten Weiterbildung der Erfindung ist vorgesehen, dass das Überführen des Prozesses in den sicheren Zustand durch Abschalten des sicheren Signals erfolgt. Weiterhin ist bevorzugt, dass eine Steuerung und/oder eine sichere Steuerung zum Ansteuern des Sicherheitsmodul und des Ausgabemoduls vorgesehen ist, wobei das Verfahren die Schritte: Vorgeben des Ist-Zustands durch die Steuerung, Kommunizieren des Ist-Zustands durch das Ausgabemodul an die Steuerung und Kommunizieren des empfangenen Ist-Zustands durch die Steuerung an das Sicherheitsmodul, aufweist. In bevorzugter Weise erfolgt das Kommunizieren des Ist-Zustands mittels eines aus dem Stand der Technik bekannten Feldbusprotokolls bzw. mittels einer aus dem Stand der Technik bekannten Feldbusanordnung.

Bevorzugte Weiterbildungen des erfindungsgemäßen Verfahrens ergeben sich in Analogie zu dem oben beschriebenen Steuerungssystem und/oder zu der oben beschriebenen Steuerungsvorrichtung.

Nachfolgend wird die Erfindung unter Bezugnahme auf die anliegende Zeichnung anhand einer bevorzugten Ausführungsform näher erläutert.

Es zeigen
- Fig. 1: ein erfindungsgemäßes Steuerungssystem zum Steuern eines Prozesses gemäß einem bevorzugten Ausführungsbeispiel der Erfindung in einer schematischen Ansicht.

Aus Fig. 1 ist ein Steuerungssystem zur Steuerung eines sicherheitsrelevanten Prozesses einer Anlage mit einem Sicherheitsmodul 1, einem Ausgabemodul 2 und einer Steuerung 3 ersichtlich.

Das Sicherheitsmodul 1, welches entsprechend den Anforderungen der Sicherheitsnormen, wie beispielsweise der DIN EN 61508, DIN EN 62061 und/oder DIN EN ISO 13849, ausgeführt ist, stellt ein sicheres Signal 4 bereit, welches vorliegend eine Spannung ist.

Das Ausgabemodul 2, welches vorzugsweise ähnlich einem aus dem Stand der Technik bekannten Ausgabemodul für industrielle Steuerungssysteme aufgebaut ist, weist einen Ausgang 5 zum Ausgeben des sicheren Signals 4 zur Steuerung des Prozesses auf. Weiterhin weist das Ausgabemodul 2 ein Mittel zur Rücklesung 6 eines Ist-Zustands des Ausgangs 5 auf. Über das Mittel zur Rücklesung 6 lässt sich ein Diagnosesignal gewinnen, welches den Ist-Zustand des Ausgangs 5 wiedergibt.

Das Sicherheitsmodul 1 weist weiterhin ein Vergleichsmittel 7 zum Vergleichen des Ist-Zustands mit einem Soll-Zustand sowie ein Abschaltmittel 8 zum Überführen des Prozesses in einen sicheren Zustand auf. Gemäß dem bevorzugten Ausführungsbeispiel der Erfindung ist vorgesehen, dass das Schaltmittel 8 den Prozess durch Abschalten des sicheren Signals 4 in einen sicheren Zustand überführt. Unter einem sicheren Zustand wird derjenige Zustand verstanden, der eine potentielle Gefährdung der Anlage und/oder eines Bedieners verhindert und der im Fehlerfalle einzunehmen ist. Vorliegend liegt der sichere Zustand dann vor, wenn das sichere Signal 4 mittels des Abschaltmittels 8 abgeschaltet ist.

Der Ausgang 5 ist als ein aus dem Stand der Technik bekannter Ausgang 5 im Anschließen einer Last wie beispielsweise eines Aktors, hier nicht dargestellt, ausgestaltet. Das Mittel zur Rücklesung 6 kann im Falle einer Ausgestaltung des sicheren Signals 4 als Spannung als ein aus dem Stand der Technik bekanntes Gerät zur Erfassung der Spannung ausgestaltet sein. Ebenso sind das Vergleichsmittel 7 und das Abschaltmittel 8 als aus dem Stand der Technik bekannte Mittel ausgestaltbar, beispielsweise ist das Abschaltmittel 8 als elektronischer Leistungsschalter ausgestaltet.

Da das Sicherheitsmodul 1 gemäß den Anforderungen der vorgenannten Sicherheitsnormen ausgestaltet ist, erkennt das Sicherheitsmodul 1 bereits die in den vorgenannten Sicherheitsnormen beschriebenen Fehlerzustände und kann durch Abschaltung des sicheren Signals 4 über das Abschaltmittel 8 den Prozess in einen sicheren Zustand überführen.

Eine derartige aus dem Stand der Technik bekannte Ausgestaltung erkennt jedoch noch nicht, ob ein Querschluss in dem Ausgang 5 vorliegt. Sofern ein Querschluss an dem Ausgang 5 vorliegt, kann das Vergleichsmittel 7 durch einen Vergleich des durch das Mittel zur Rücklesung 6 bereitgestellten Ist-Zustands mit dem Soll-Zustand feststellen, ob eine Differenz der vorgenannten Zustände vorliegt. In einem solchen Fall schaltet das Abschaltmittel 8 das sichere Signal 4 ab, so dass das sichere Signal 4 nicht mehr an dem Ausgang 5 anliegt und der Prozess in einen sicheren Zustand überführt wird.

Die Steuerung 3, welche als eine aus dem Stand der Technik bekannte Steuerung für Automatisierungseinrichtungen ausgeführt ist, kommuniziert mittels eines Feldbusses 9 mit dem Sicherheitsmodul 1 und dem Ausgabemodul 2. Der Feldbus 9 kann als ein aus dem Stand der Technik bekannter Feldbus 9, wie beispielsweise Interbus, Profibus oder Profinet, ausgeführt sein. Ebenfalls kann die Steuerung 3 als Busmaster ausgeführt sein.

Gemäß dem bevorzugten Ausführungsbeispiel der Erfindung generiert die Steuerung 3 den Soll-Zustand, aufgrund dessen das Sicherheitsmodul 1 das sichere Signal 4 generiert. Das sichere Signal 4 wird durch das Ausgabemodul 2 an dem Ausgang 5 dem Aktor zur Verfügung gestellt. Das Mittel zur Rücklesung 6 liest das an dem Ausgang 5 ausgegebene sicher Signal 4 als Ist-Zustand zurück und sendet den Ist-Zustand über den Feldbus 9 an die Steuerung 3. Die Steuerung 3 sendet den empfangenen Ist-Zustand über den Feldbus 9 an das Sicherheitsmodul 1. Das Vergleichsmittel 7 des Sicherheitsmoduls 1 vergleicht den empfangenen Ist-Zustand mit dem Soll-Zustand und schaltet, falls das Vergleichsmittel 7 eine Differenz zwischen dem Ist-Zustand und dem Soll-Zustand feststellt, das sichere Signal 4 ab.

Im Ergebnis wird ein Steuerungssystem zum Steuern eines Prozesses, insbesondere zum Steuern eines sicherheitsrelevanten Prozesses, angegeben, das in sehr kostengünstiger Weise insbesondere für sicherheitsrelevante Anwendungen verwendbar ist.

### Bezugszeichenliste

- Sicherheitsmodul: 1
- Ausgabemodul: 2
- Steuerung: 3
- Sicheres Signal: 4
- Ausgang: 5
- Mittel zur Rücklesung: 6
- Vergleichsmittel: 7
- Abschaltmittel: 8
- Feldbus: 9

## Patentansprüche

1. Steuerungssystem zum Steuern eines Prozesses, mit einem Sicherheitsmodul (1) und einem Ausgabemodul (2), wobei das Sicherheitsmodul (1) ein sicheres Signal (4) bereitstellt,
das Ausgabemodul (2) einen Ausgang (5) zum Ausgeben des sicheren Signals (4) zur Steuerung des Prozesses aufweist,
das Ausgabemodul (2) ein Mittel zur Rücklesung (6) eines Ist-Zustands des Ausgangs (5) aufweist,
**dadurch gekennzeichnet, dass**
mittels das Sicherheitsmoduls (1) der zurückgelesene Ist-Zustand mit einem Soll-Zustand vergleichbar ist und bei einer Differenz zwischen dem Ist-Zustand und dem Soll-Zustand der Prozess durch Abschalten des sicheren Signals (4) in einen sicheren Zustand überführbar ist.

2. Steuerungssystem nach Anspruch 1, wobei eine Steuerung (3) und/oder eine sichere Steuerung zum Ansteuern des Sicherheitsmoduls (1) und/oder des Ausgabemoduls (2) vorgesehen ist und der Soll-Zustand durch die Steuerung (3) und/oder durch die sichere Steuerung vorgebbar ist.

3. Steuerungssystem nach Anspruch 2, wobei der zurückgelesene Ist-Zustand von dem Ausgabemodul (2) an die Steuerung (3) und/oder an die sichere Steuerung übermittelbar ist und der empfangene Ist-Zustand von der Steuerung (3) und/oder von der sicheren Steuerung an das Sicherheitsmodul (l) übermittelbar ist.

4. Steuerungssystem nach Anspruch 2 oder 3, wobei ein Feldbus (9) zur Kommunikation zwischen dem Sicherheitsmodul (1), dem Ausgabemodul (2) und der Steuerung (3) und/oder der sicheren Steuerung vorgesehen ist.

5. Steuerungssystem nach einem der vorhergehenden Ansprüche, wobei das Steuerungssystem als Feldbusanordnung ausgeführt ist.

6. Verfahren zum Steuern eines Prozesses mit einem Sicherheitsmodul (1) und einem Ausgabemodul (2), aufweisend die Schritte:
Bereitstellen eines sicheren Signals (4) durch das Sicherheitsmodul (1),
Ausgeben des sicheren Signals (4) zum Steuern des Prozesses durch das Ausgabemodul (2),
Rücklesen eines Ist-Zustands des ausgegebenen sicheren Signals (4) durch das Ausgabemodul (2),
**gekennzeichnet durch** die Schritte:
Feststellen einer Differenz zwischen dem Ist-Zustand und einem Soll-Zustand für den Prozess **durch** das Sicherheitsmodul (1) und
Überführen des Prozesses beim Vorliegen einer Differenz in einen sicheren Zustand **durch** Abschalten des sicheren Signals (4).

7. Verfahren nach Anspruch 6, wobei eine Steuerung und/oder eine sichere Steuerung zum Ansteuern des Sicherheitsmoduls (1) und/oder des Ausgabemodul (2) vorgesehen ist, aufweisend die Schritte:
Vorgeben des Ist-Zustands durch die Steuerung (3) und/oder durch die sichere Steuerung,
Kommunizieren des Ist-Zustands durch das Ausgabemodul (2) an die Steuerung (3) und/oder an die sichere Steuerung und
Kommunizieren des empfangenen Ist-Zustands durch die Steuerung (3) und/oder durch die sichere Steuerung an das Sicherheitsmodul (1).

## Claims

1. A control system for controlling a process, said system comprising a safety modul (1) and an output module (2), wherein the safety module (1) provides a secure signal (4),
the output module (2) comprises an output (5) for outputting the secure signal (4) for controlling the process,
the output module (2) comprises a means for reading back (6) an actual state of the output (5),
**characterised in that** the read-back actual state can be compared by means of the safety module (1) with a target state, and, in case of a difference between the actual state and the target state, the process can be transferred into a safe state by switching off the secure signal (4).

2. The control system according to claim 1, wherein a control unit (3) and/or a secure control unit is provided to control the safety module (1) and/or the output module (2), and the target state can be predetermined by the control unit and/or by the secure control unit.

3. The control system according to claim 2, wherein the read-back actual state can be transmitted by the output module (2) to the control unit (3) and/or to the secure control unit, and the received actual state can be transmitted from the control unit (3) and/or from the secure control unit to the safety module (1).

4. The control system according to claim 2 or 3, wherein a field bus (9) is provided for communication between the safety module (1), the output module (2), and the control unit and/or the secure control unit.

5. The control system according to any one of the preceding claims, wherein the control system is embodied as a field bus arrangement.

6. A method for controlling a process using a safety module (1) and an output module (2), said method comprising the following steps:
providing a secure signal (4) by means of the safety module (1),
outputting the secure signal (4) in order to control the process by means of the output module (2),
reading back an actual state of the output secure signal (4) by means of the output module (2),
**characterised by** the following steps:
determining a difference between the actual state and a target state for the process by means of the safety module (1), and,
when there is a difference, transferring the process into a safe state by switching off the secure signal (4).

7. The method according to claim 6, wherein a control unit and/or a secure control unit is provided to control the safety module (1) and/or the output module (2), said method comprising the following steps:
predetermining the actual state by means of the control unit (3) and/or by means of the secure control unit,
communicating the actual state by means of the output module (2) to the control unit (3) and/or
to the secure control unit, and
communicating the received actual state to the safety module (1) by means of the control unit (3) and/or by means of the secure control unit.

## Revendications

1. Système de commande pour la commande d'un processus, avec un module de sécurité (1) et un module de sortie (2), où le module de sécurité (1) fournit un signal fiable (4) pour la commande d'un processus,
le module de sortie (2) présente un moyen pour la relecture (6) d'un état réel de la sortie (5),
**caractérisé en ce**
**qu'**au moyen du module de sécurité (1) l'état réel relu peut être comparé à un état souhaité, et en cas de différence entre l'état réel et l'état souhaité, le processus peut être transféré dans un état fiable par la coupure du signal fiable (4).

2. Système de commande selon la revendication 1, où une commande (3) et/ou une commande fiable est prévue pour le démarrage du module de sécurité (1) et/ou du module de sortie (2) et l'état souhaité peut être prédéfini par la commande (3) et/ou par la commande fiable.

3. Système de commande selon la revendication 2, où l'état réel relu par le module de sortie (2) peut être transféré vers la commande (3) et/ou vers la commande fiable et l'état réel reçu par la commande (3) et/ou la commande fiable peut être transféré vers le module de sécurité (1).

4. Système de commande selon la revendication 2, ou 3, où un bus de champ (9) est prévu pour la communication entre le module de sécurité (1), le module de sortie (2) et la commande (3), et/ou la commande fiable.

5. Système de commande selon l'une des revendications précédentes, où le système de commande est conçu sous la forme d'un ensemble de bus de champ.

6. Procédé de commande d'un procédé avec un module de sécurité (1) et un module de sortie (2) présentant les étapes :
de fourniture d'un signal fiable (4) par le module de sécurité (1),
d'émission du signal fiable (4) pour la commande d'un processus par le module de sortie (2),
de relecture d'un état réel du signal fiable (4) émis par le module de sortie (2),
**caractérisé par** les étapes :
de constatation d'une différence entre l'état réel et un état souhaité pour le processus par le module de sécurité (1) et
de transfert du processus en cas de présence d'une différence dans un état fiable par une coupure du signal fiable (4).

7. Procédé selon la revendication 6, où une commande et/ou une commande fiable est prévue pour le démarrage du module de sécurité (1) et/ou du module de sortie (2), présentant les étapes :
de prédéfinition d'un état réel par la commande (3) et/ou la commande fiable,
de communication de l'état réel par le module de sortie (2) à la commande (3) et/ou à la commande fiable, et
de communication de l'état réel reçu par la commande (3) et/ou la commande fiable au module de sécurité (1).
